# EUROPEAN PATENT APPLICATION

(11) **EP 4 404 319 A1**
(43) Date of publication of application: **24.07.2024**
(21) Application number: 22869598.7
(22) Date of filing: 17.03.2022
(51) Int. Cl.: H01M 10/0562, H01M 10/0585, H01M 50/209, H01M 50/213, H01M 50/247, H01M 50/50

(54) **BATTERY PACK AND ELECTRIC TOOL**

(30) Priority: 15.09.2021 JP 2021150437
(71) Applicant: Panasonic Holdings Corporation, Osaka 571-8501 (JP)
(72) Inventor: KITAMURA, Kota, Kadoma-shi Osaka 571-0057 (JP); TSUJIMOTO, Naoki, Kadoma-shi Osaka 571-0057 (JP)
(74) Representative: Müller-Boré & Partner Patentanwälte PartG mbB
(86) International application number: PCT/JP2022/012369
(87) International publication number: WO 2023/042446

(57) **Abstract**

An object is to improve the reliability of a battery pack. A battery pack (1) includes a cell group (11) including a plurality of cells (10) which are all-solid-state batteries and which are connected to each other. The cell group (11) is a parallel series cell group (11ps) or a series parallel cell group (11sp). The parallel series cell group (11ps) includes two or more parallel cell groups (11p) connected in series to each other. Each of the two or more parallel cell groups (11p) includes three or more cells (10) connected in parallel to each other. The series parallel cell group (11sp) includes three or more series cell groups (11s) connected in parallel to each other. Each of the three or more series cell groups (11s) includes two or more cells (10) connected in series to each other. In the cell group (11), a parallel number is greater than a series number. The parallel number is a number of the plurality of cells (10) included in each of the two or more parallel cell groups (11p) or a number of the three or more series cell groups (11 s) included in the series parallel cell group (11sp). The series number is a number of the plurality of cells (10) included in each of the three or more series cell groups (11s) or a number of the two or more parallel cell groups (11p) included in the parallel series cell group (11ps).

## Description

### Technical Field

The present disclosure relates to battery packs and electric tools and specifically relates to a battery pack including all-solid-state batteries and an electric tool including the battery pack.

### Background Art

Patent Literature 1 describes a battery pack including a plurality of all-solid-state batteries. In this battery pack, the plurality of all-solid-state batteries each have a sheet shape and are stacked one on top of another. Moreover, the plurality of all-solid-state batteries are connected in series or parallel to each other in accordance with a required voltage or capacity.

A thin all-solid-state battery is, however, susceptible to damage caused by an impact such as a fall or a collision. Moreover, the all-solid-state battery generally has a smaller suppliable current than a battery (e.g., a conventional lithium ion battery) including an electrolytic solution and having the same capacity and the same voltage as the all-solid-state battery and is therefore easily damaged when the current increases. For example, if some of a plurality of all-solid-state batteries connected in parallel to each other in a battery pack are damaged by an impact, a current flowing through each of the remaining all-solid-state batteries increases, and all the all-solid-state batteries may be damaged in a chain reaction.

Therefore, the battery pack including the all-solid-state batteries has the problem that reliability regarding damage caused by, for example, an impact has to be improved. The battery pack described in Patent Literature 1 is still susceptible to improvement in terms of the reliability.

### Citation List

### Patent Literature

Patent Literature 1: JP 2021-053752 A

### Summary of Invention

In a battery pack including a plurality of all-solid-state batteries, generally, an increased number of all-solid-state batteries having a reduced thickness are stacked one on top of another to increase at least one of the capacity or the voltage while the size of the battery pack is suppressed from increasing.

It is an object of the present disclosure to provide a battery pack including all-solid-state batteries and an electric tool including the battery pack, leading to improved reliability.

A battery pack according to an aspect of the present disclosure includes a cell group including a plurality of cells which are all-solid-state batteries and which are electrically connected to each other. The cell group is a parallel series cell group or a series parallel cell group. The parallel series cell group includes two or more parallel cell groups connected in series to each other. Each of the two or more parallel cell groups includes, as the plurality of cells, three or more cells connected in parallel to each other. The series parallel cell group includes three or more series cell groups connected in parallel to each other. Each of the three or more series cell groups includes, as the plurality of cells, two or more cells connected in series to each other. In the cell group, a parallel number is greater than a series number. The parallel number is a number of the plurality of cells included in each of the two or more parallel cell groups or a number of the three or more series cell groups included in the series parallel cell group. The series number is a number of the plurality of cells included in each of the three or more series cell groups or a number of the two or more parallel cell groups included in the parallel series cell group.

An electric tool according to an aspect of the present disclosure includes the battery pack, and an electric tool body configured to be operated by electric power from the battery pack.

### Brief Description of Drawings

FIG. 1 is a side view of an electric tool including a battery pack according to an embodiment of the present disclosure;
FIG. 2A is a perspective view of an example of a cell group (an example of a parallel series cell group) included in the battery pack;
FIG. 2B is a perspective view of a variation of the cell group of FIG. 2A;
FIG. 3 is a perspective view of another example of the cell group (another example of the parallel series cell group) included in the battery pack;
FIG. 4 is a conceptual view of another example of the cell group (another example of the parallel series cell group) included in the battery pack;
FIG. 5 is a conceptual view of another example of the cell group (an example of a series parallel cell group) included in the battery pack;
FIG. 6A is a top view of another example of the cell group (another example of the series parallel cell group) included in the battery pack;
FIG. 6B is a side view of the another example of FIG. 6A;
FIG. 7A is a top view of another example of the cell group (another example of the series parallel cell group) included in the battery pack; and
FIG. 7B is a side view of the another example of FIG. 7A.

### Description of Embodiments

Figures described in the embodiment described below are schematic views, and therefore, the ratio of sizes and the ratio of thicknesses of components in the drawings do not necessarily reflect actual dimensional ratios. Configurations described in the embodiment described below are a mere example of the present disclosure. The present disclosure is not limited to the embodiment described below. The embodiment may be modified in various manners depending on design or the like as long as the object of the present disclosure is achieved.

### (1) Overview of Electric Tool

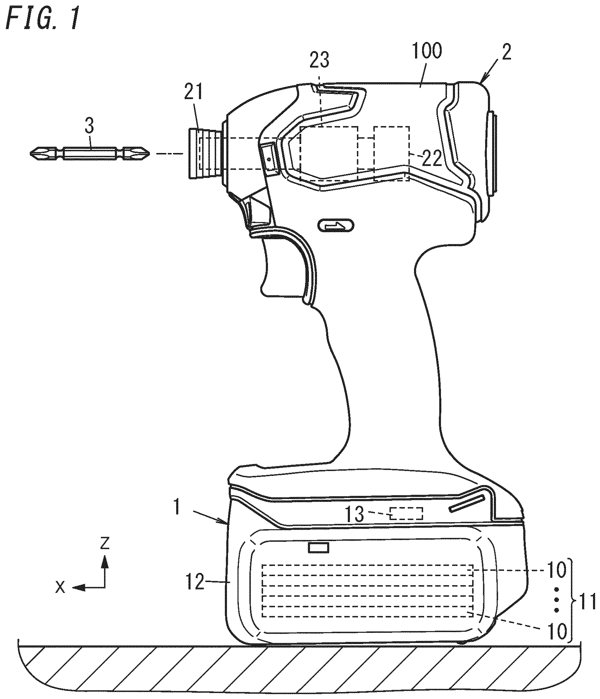

An electric tool 100 according to an embodiment of the present disclosure includes a battery pack 1, an electric tool body 2, and a tip tool 3, for example, as shown in FIG. 1. Note that the tip tool 3 does not have to be included in components of the electric tool 100.

The electric tool 100 is, for example, an electrically driven screwdriver, an electrically driven drill, or the like. Note that the electric tool 100 may be any tool as long as it includes the battery pack 1 and is configured to be operated by electric power from the battery pack 1.

### (1-1) Battery Pack

The battery pack 1 supplies electric power to the electric tool body 2. The battery pack 1 of the present embodiment is a battery pack including all-solid-state batteries.

The all-solid-state battery is a battery including a solid electrolyte. A current suppliable by the all-solid-state battery is smaller than (is, for example, only about 1/10) that in the case of a battery including a liquid electrolyte (electrolytic solution), whereas the amount of time for which the all-solid state battery can supply the current is greater than (is, for example, about 10 times) that in the case of the battery including the liquid electrolyte.

Note that the battery pack 1 in the present embodiment is attachable to and detachable from the electric tool body 2 and is charged in a state where the battery pack 1 is detached from the electric tool body 2. Note that the battery pack 1 may be charged in a state where the battery pack 1 is attached to the electric tool body 2.

### (1-1-1) Cell Group

The battery pack 1 includes a cell group 11. In the present embodiment, the cell group 11 includes a plurality of cells 10 electrically connected to each other. Two or more cells 10 included in the cell group 11 are each a single cell which is an all-solid-state battery. A connection between the two or more cells 10 included in the cell group 11 may be a parallel connection, a series connection, or a combination of two types of connections, namely, the parallel connection and the series connection.

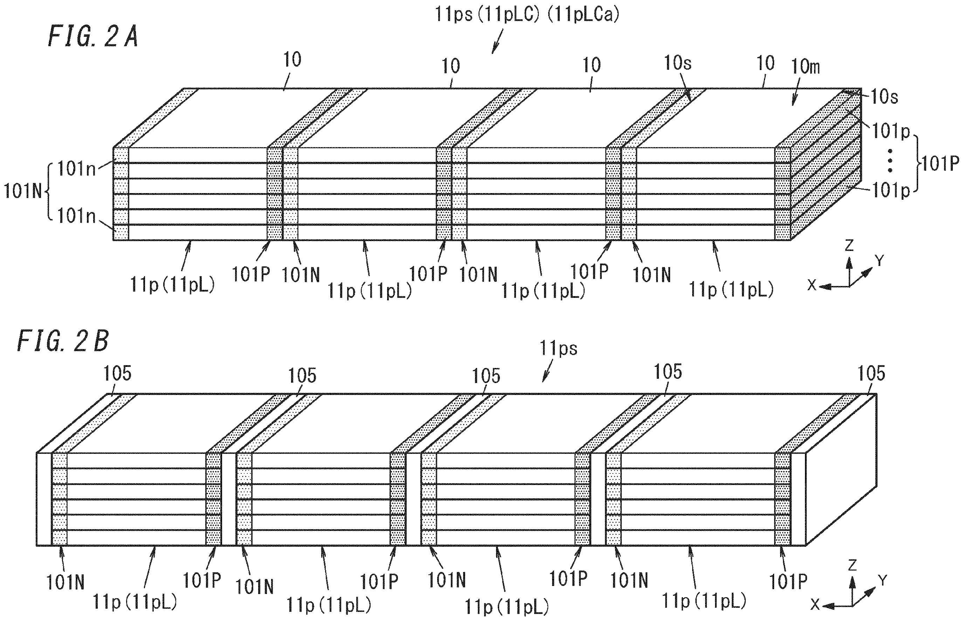

The cell group 11 of the present embodiment includes six or more cells 10 connected to each other, for example, as shown in FIGS. 2 to 7. A connection among the six or more cells 10 included in the cell group 11 is the combination of the parallel connection and the series connection.

### (1-1-2) Cells

Each of the cells 10 in the present embodiment has a plate shape, for example, as shown in FIGS. 2, 3, 6, and 7. The thickness of each of plate-shaped cells 10 is, for example, about 1 to several millimeters but may be less than 1 millimeter or may be greater than or equal to 10 millimeters.

Each of the plate-shaped cells 10 has a major surface 10m usually having a rectangular shape, for example, as shown in FIGS. 2, 3, 6, and 7, but the major surface 10m may have a shape (a polygonal shape such as a hexagonal shape, a circular shape, etc.) other than the rectangular shape.

Note that each cell 10 is not limited to having the plate shape as shown in FIGS. 2, 3, 6, and 7 but may have a shape having an increased thickness. Examples of the shape having the increased thickness include a rectangular parallelepiped, a cube, and a circularly columnar shape.

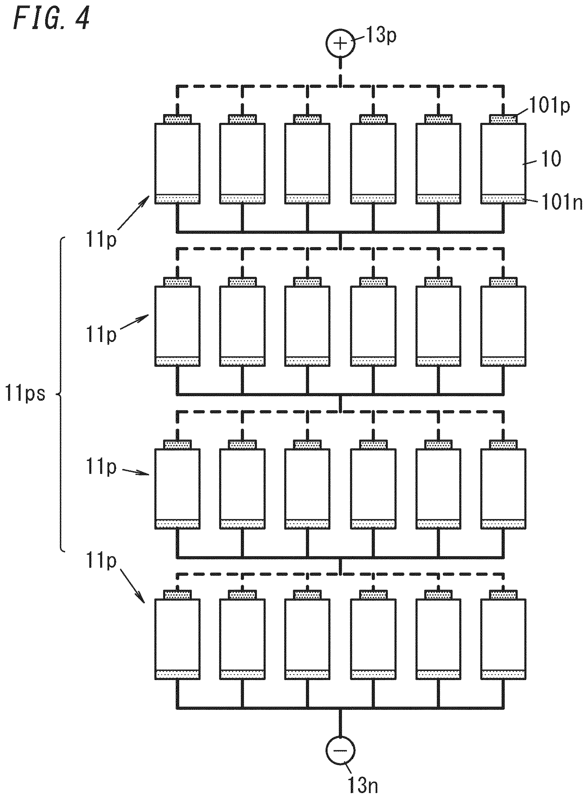

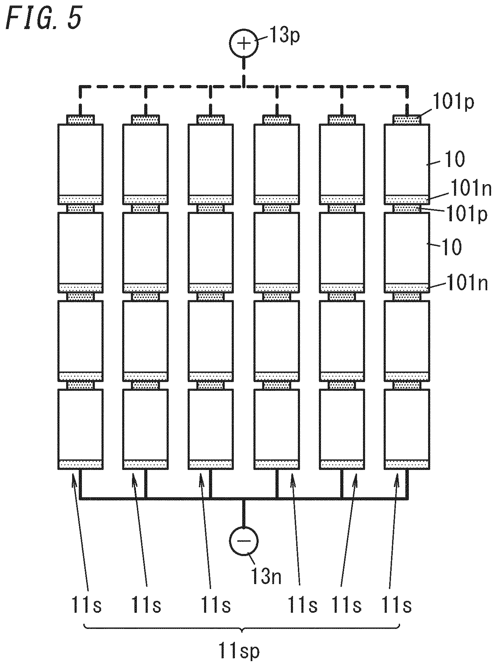

Each cell 10 may have a circularly columnar shape, for example, as shown in FIGS. 4 and 5. Note that the length in an axial direction is greater than the diameter of a bottom surface, of each of the cells 10 having the circularly columnar shape shown in FIGS. 4 and 5 (e.g., a dry cell battery type), but the diameter of the bottom surface may be greater than the length in the axial direction (e.g., a button battery type).

### (1-1-3) Electrodes

Each cell 10 is provided with electrodes. As described above, each cell 10 of the present embodiment has the plate shape, and the major surface 10m of each cell 10 is rectangular.

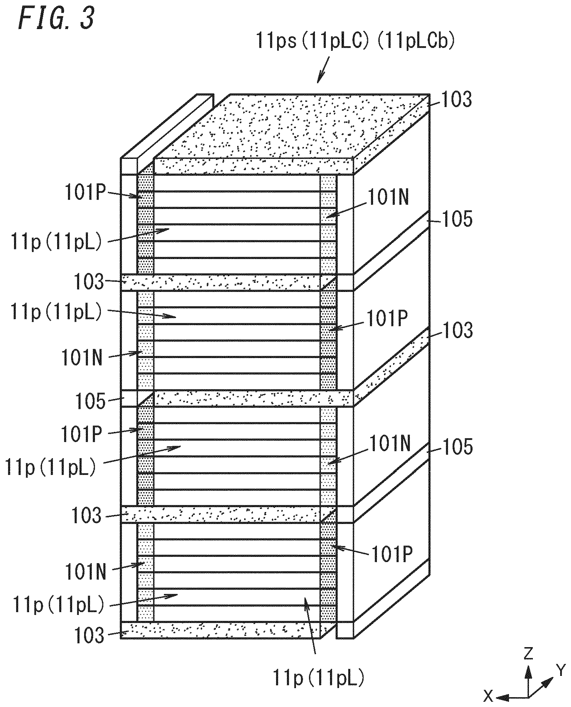

Each cell 10 has four side surfaces 10s, and of the four side surfaces, two side surfaces 10s opposite each other are provided with the electrodes, for example, as shown in FIGS. 2 and 3.

Specifically, the electrodes include a positive pole 101p and a negative pole 101n. The positive pole 101p is a positive electrode, and the negative pole 101n is a negative electrode. One (hereinafter referred to as one side surface 10s) of the two side surfaces 10s opposite each other is provided with the positive pole 101p, and the other (hereinafter referred to as the other side surface 10s) of the two side surfaces 10s opposite each other is provided with the negative pole 101n.

The thickness and the depth of each of the electrodes (the positive pole 101p and the negative poles 101n) are respectively equal to, or substantially equal to, the thickness and the depth of a corresponding one of the cells 10, for example, as shown in FIGS. 2, 3, 6, and 7. Moreover, the width of each of the electrodes (the positive pole 101p and the negative pole 101n) is, in the example shown in FIG. 2 and other figures, substantially 1/10 the width of a corresponding one of the cells 10 but may be less than, or greater than, 1/10 the width of the corresponding one of the cells 10.

Note that in the present embodiment, the thickness is a size in a Z-axis direction, the depth is a size in a Y direction, and the width is a size in an X direction. The Z axis is an axis extending vertically upward from a prescribed point (origin), and the X axis and the Y axis are each an axis passing through the origin, being perpendicular to the Z axis, and extending in directions perpendicular to each other (left and depth directions with respect to the paper surface).

### (1-1-4) First Variation of Electrodes

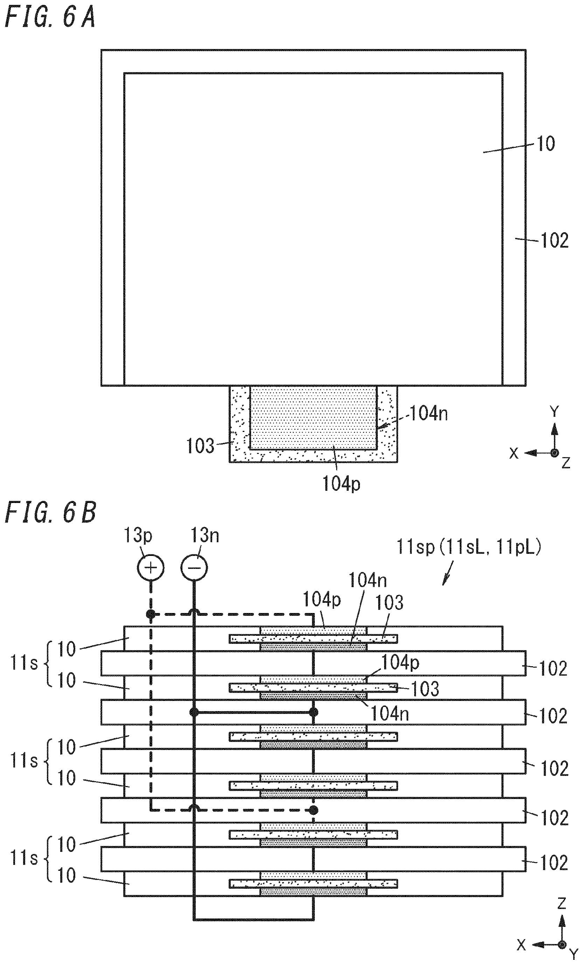

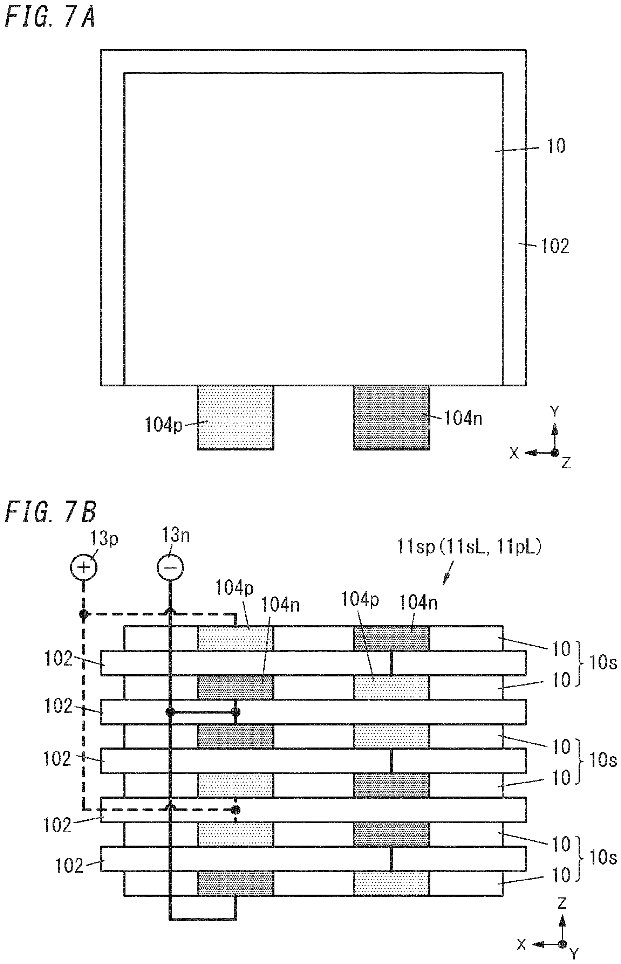

Note that in each cell 10, the electrodes (the positive pole 101p and the negative pole 101n) may be disposed on one side surface 10s. For example, a cell 10 whose major surface 10m has a rectangular shape has four side surfaces 10s, and of the four side surfaces 10s, one side surface 10s parallel to the X axis may be provided with both a positive pole 101p and a negative pole 101n as shown in FIGS. 6A and 7A.

Specifically, the positive pole 101p and the negative pole 101n may be disposed within the one side surface 10s and at different heights (within different horizontal planes), while an insulator 103 is disposed between the positive pole 101p and the negative pole 101n, for example, as shown in FIG. 6A.

Alternatively, the positive pole 101p and the negative pole 101n may be disposed within the one side surface 10s and at the same height (within the same horizontal plane), while a prescribed space is provided between the positive pole 101p and the negative pole 101n, for example, as shown in FIG. 7A.

Note that in the present embodiment, the height is a location (e.g., a Z-coordinate) in the Z-axis direction, and the horizontal plane is a plane perpendicular to the Z axis.

### (1-1-5) Second Variation of Electrodes

For example, a cylindrical cell 10 has two bottom surfaces, and one bottom surface of the two bottom surfaces is provided with a positive pole 101p, and the other bottom surface of the two bottom surfaces is provided with a negative pole 101n as shown in FIGS. 4 and 5.

### (1-1-6) Electrode Groups

The cell group 11 includes electrode groups. Each of the electrode groups is a group obtained by connecting to each other the electrodes (the positive poles 101p, the negative poles 101n) having the same polarity and provided to the plurality of cells 10 included in the cell group 11.

The electrode group includes a positive pole group 101P and a negative pole group 101N. The positive pole group 101P includes the positive poles 101p each of which is on one side surface 10s of a corresponding one of the two or more cells 10 included in the cell group 11 and which are connected to each other. The negative pole group 101N includes the negative poles 101n each of which is on the other side surface 10s of the corresponding one of the two or more cells 10 included in the cell group 11 and which are connected to each other.

In the present embodiment, the positive poles 101p each disposed on one side surface 10s of a corresponding one of the plurality of plate-shaped cells 10 included in the cell group 11 are directly connected to each other, thereby forming the positive pole group 101P, for example, as shown in FIGS. 2 and 3. Moreover, the negative poles 101n each disposed on the other side surface 10s of the corresponding one of the plurality of plate-shaped cells 10 included in the cell group 11 are directly connected to each other, thereby forming the negative pole group 101N.

### (1-1-7) Housing and Terminal

The battery pack 1 includes a housing 12 configured to house the cell group 11, and a terminal 13 protruding from an interior beyond an outer surface of the housing 12. The terminal 13 is connected to the electrode groups (the positive pole group 101P and the negative pole group 101N) included in the cell group 11 in the housing 12.

The terminal 13 includes a positive terminal 13p and a negative terminal 13n. The positive terminal 13p is connected to the positive pole group 101P, and the negative terminal 13n is connected to the negative pole group 101N.

### (1-2) Electric Tool Body

The electric tool body 2 is operated by electric power from the battery pack 1. Specifically, the electric tool body 2 includes a body terminal (not shown). The body terminal includes a body positive terminal and a body negative terminal (which are not shown).

When the battery pack 1 is attached to the electric tool body 2, the terminal 13 (the positive terminal 13p and the negative terminal 13n) of the battery pack 1 is connected to the body terminal (the body positive terminal and the body negative terminal), and thereby, the electric tool body 2 can be operated by the electric power from the battery pack 1.

As shown in FIG. 1, the electric tool body 2 includes an attachment 21 to which the tip tool 3 is to be attached, a driver 22 configured to convert the electric power from the battery pack 1 into rotational force, a transmitter 23 configured to transmit the rotational force from the driver 22 to the attachment 21, and other components.

### (1-3) Tip Tool

The tip tool 3 is, for example, a screwdriver bit, as shown in FIG. 1, for screw tightening work but may be, for example, a drill bit for a hole forming process, that is, the tip tool 3 may be of any type.

### (2) Operation of Electric Tool

In a state where the battery pack 1 is attached to the electric tool body 2 and the tip tool 3 is also attached to the attachment 21 of the electric tool body 2, a prescribed operation (e.g., an operation such as engaging the tip tool 3 with an object such as a screw and pulling a trigger of the electric tool) is given to the electric tool body 2, thereby supplying the electric power from the cell group 11 via the electrode group (the positive pole group 101P and the negative pole group 101N) and the body terminal (the body positive terminal and the body negative terminal) to the electric tool body 2.

In the electric tool body 2, the driver 22 converts the electric power from the battery pack 1 into rotational force, and the rotational force from the driver 22 is transmitted via the transmitter 23 to the attachment 21. This rotates the tip tool 3 attached to the attachment 21, thereby tightening the object such as the screw with which the tip tool 3 has been engaged.

### (3) Details of Cell Group

### (3-1) Combination of Parallel Connection and Series Connection

The connection among the six or more cells 10 included in the cell group 11 is a combination of two types of connections, namely, the parallel connection and the series connection.

The cell group 11 in the present embodiment is a parallel series cell group 11ps or a series parallel cell group 11sp.

### (3-1-1) Parallel Cell Group and Parallel series Cell Group

The parallel series cell group 11ps includes two or more parallel cell groups 11p connected in series to each other, for example, as shown in FIGS. 2 to 4. Each parallel cell group 11p includes three or more cells 10 connected in parallel to each other.

The parallel series cell group 11ps shown in each of FIGS. 2 to 6 includes four parallel cell groups 11p which are connected in series to each other and each of which includes six cells 10 connected in parallel to each other.

### (3-1-2) Series Cell Group and Series parallel Cell Group

The series parallel cell group 11sp includes three or more series cell groups 11s connected in parallel to each other as shown in FIGS. 5 to 7. Each series cell group 11s includes two or more cells 10 connected in series to each other.

The series parallel cell group 11sp shown in FIG. 5 includes six series cell groups 11s which are connected in parallel to each other and each of which includes four cells 10 connected in series to each other.

The series parallel cell group 11sp shown in each of FIGS. 6 and 7 includes three series cell groups 11s which are connected in parallel to each other and each of which includes two cells 10 connected in series to each other.

### (3-1-3) Parallel Number and Series Number

Here, in the cell group 11 (the parallel series cell group 11ps or the series parallel cell group 11sp) of the present embodiment, a parallel number is greater than a series number.

The parallel number is the number of cells 10 included in each parallel cell group 11p or the number of series cell groups 11s included in the series parallel cell group 11sp.

The series number is the number of cells 10 included in each series cell group 11s or the number of parallel cell groups 11p included in the parallel series cell group 11ps.

That is, when the parallel number is denoted by "i" and the series number is denoted by "j", "i is an integer greater than or equal to 3", "j is an integer greater than or equal to 2", and the inequality expression "i > j" holds true.

Note that the parallel series cell group 11ps including j parallel cell groups 11p which are connected in series to each other and each of which includes i cells 10 connected in parallel to each other may be represented as "i-parallel j-series cell group". Moreover, the series parallel cell group 11sp including i series cell groups 11s which are connected in parallel to each other and each of which includes j cells 10 connected in series to each other may be represented as "j-series i-parallel cell group".

According to this notational method, the parallel series cell group 11ps shown in each of FIGS. 2A, 2B, 3, and 4 is a "6-parallel 4-series cell group" including four parallel cell groups 11p which are connected in series to each other and each of which includes six cells 10 connected in parallel to each other.

Moreover, the series parallel cell group 11sp shown in FIG. 5 is a "4-series 6-parallel cell group" including six series cell groups 11s which are connected in parallel to each other and each of which includes four cells 10 connected in series to each other.

Moreover, the series parallel cell group 11sp shown in each of FIGS. 6B and 7B is a "2-series 3-parallel cell group" including three series cell groups 11s which are connected in parallel to each other and each of which includes two cells 10 connected in series to each other.

As described above, in the cell group 11 including the six or more cells 10 connected to each other in the combination of the parallel connection and the series connection, the parallel number is set to be greater than the series number, thereby implementing a battery pack 1 which includes all-solid-state batteries and which leads to improved reliability regarding damage caused by, for example, an impact. Moreover, the battery pack 1 configured as described above is provided to an electric tool 100, so that the electric tool 100 leads to improved reliability.

Thus, as a result of the improved reliability, stacking an increased number of all-solid-state batteries having a reduced thickness one on top of another can provide a battery pack 1 including the all-solid-state batteries and configured to increase at least one of the capacity or the voltage while the size is suppressed from increasing and an electric tool 100 including the battery pack 1 configured as described above.

### (3-1-4) Specific Examples of Improvement in Reliability

### (3-1-4a) Battery Pack Including Parallel series Cell Group

For example, in the 6-parallel 4-series cell group 11ps shown in FIG. 4, two cells 10 of 24 cells 10 are assumed to be damaged. The two cells 10 are a second cell 10 from the left in a second parallel cell group 11p from the top and a first cell 10 from the left in a third parallel cell group 11p from the top.

In this case, in each of the second parallel cell group 11p from the top and the third parallel cell group 11p from the top, five cells 10 except for the one damaged cell function. Therefore, the battery pack 1 including the 6-parallel 4-series cell group 11ps as a whole can maintain the value of a voltage in the case of no damage and can secure a current having a value of 5/6 that in the case of no damage.

Further, even when in the 6-parallel 4-series cell group lips shown in FIG. 4, two cells in one parallel cell group 11p (e.g., the second parallel cell group 11p from the top) are damaged, the remaining four cells 10 function. Therefore, the battery pack 1 including the 6-parallel 4-series cell group 11ps as a whole can maintain the value of a voltage in the case of no damage and can secure a current having a value of 4/6 that in the case of no damage.

Furthermore, even when in the 6-parallel 4-series cell group 11ps shown in FIG. 4, four cells equal to the series number in the one parallel cell group 11p are damaged, the remaining two cells 10 function. Therefore, the battery pack 1 including the 6-parallel 4-series cell group 11ps as a whole can maintain the value of a voltage in the case of no damage and can secure a current having a value of 2/6 that in the case of no damage.

Note that the 6-parallel 4-series cell group lips of each of FIGS. 2A and 3 can also provide the effect of maintaining the voltage and securing the current similarly to the above case.

In general, even when in an i-parallel j-series cell group 11ps, the same number of cells 10 as the series number j in one parallel cell group 11p are damaged, the remaining (i-j) cells 10 function. Therefore, a battery pack 1 including the i-parallel j-series cell group 11ps as a whole can maintain the value of a voltage in the case of no damage and can secure a current having a value of {(i-j)/i} that in the case of no damage.

Thus, this holds true as long as "i > j" even when the parallel number i and/or the series number j increases. Therefore, the battery pack 1 including the parallel series cell group lips leads to improved reliability regarding damage caused by, for example, an impact. Moreover, as a result of the improved reliability, at least one of the capacity or the voltage can be increased.

### (3-1-4b) Battery Pack Including Series parallel Cell Group

For example, in the 4-series 6-parallel cell group 11sp shown in FIG. 5, two cells 10 of 24 cells 10 are assumed to be damaged. The two cells 10 are a third cell 10 from the top in a first series cell group 11s from the left and a second cell 10 from the top in a second series cell group 11s from the left.

In this case, two series cell groups, namely, the first and second series cell groups 11s from the left no longer function, but four series cell groups, namely, third to sixth series cell groups 11s from the left function. Therefore, the battery pack 1 including the 4-series 6-parallel cell group 11sp as a whole can maintain the value of a voltage in the case of no damage and can secure a current having a value of 4/6 that in the case of no damage.

Note that the 2-series 4-parallel cell group 11sp of each of FIGS. 6B and 7B can also provide the effect of maintaining the voltage and securing the current similarly to the above case.

In general, even when in a j-series i-parallel cell group 11sp, one cell 10 in each of the same number of series cell groups 11s as the series number j is damaged, (i-j) series cell groups 11s function. Therefore, the battery pack 1 including the j-series i-parallel cell group 11sp as a whole can maintain the value of a voltage in the case of no damage and can secure a current having a value of {(i-j)/i} that in the case of no damage.

Thus, this holds true as long as "i > j" even when the parallel number i and/or the series number j increases. Therefore, the battery pack 1 including the series parallel cell group 11sp leads to improved reliability regarding damage caused by, for example, an impact. Moreover, as a result of the improved reliability, at least one of the capacity or the voltage can be increased.

### (3-2) Stacked Cell

In the present embodiment, the cell group 11 as described above is formed by stacking a plurality of plate-shaped cells 10 one on top of another, thereby increasing at least one of the capacity or the voltage while the size of the battery pack 1 is suppressed from increasing.

Specifically, each cell 10 of the present embodiment is, for example, plate-shaped as described above and has the side surfaces 10s provided with the electrodes. Two or more such plate-shaped cells 10 are stacked one on top of another such that the major surfaces 10m overlap each other, and the electrodes on the side surfaces 10s of the two or more cells 10 stacked one on top of another are connected to each other, thereby forming a stacked cell (see FIGS. 2, 3, 6, and 7).

Note that the two or more cells 10 included in the stacked cell are directly stacked one on top of another, for example, as shown in FIGS. 2 and 3 but may be stacked while a spacer 102 is disposed between the cells 10 as shown in FIGS. 6 and 7.

### (3-2-1) Connection of Electrodes to Each Other

The electrodes of the two or more cells 10 included in the stacked cell may be connected to each other directly or via a conductor.

Moreover, the connection between the electrodes of the two or more cells 10 included in the stacked cell may be the parallel connection or the series connection.

In the present embodiment, the two or more cells 10 are stacked one on top of another such that electrodes having the same polarity are arranged on the same side of two side surfaces 10s opposite each other, for example, as shown in FIGS. 2 and 3. Thus, the electrodes, which have the same polarity, of the two or more cells 10 are directly connected to each other (the positive poles 101p are directly connected to each other, and the negative poles 101n are directly connected to each other), thereby implementing the parallel connection.

Note that, when the positive pole 101p and the negative pole 101n are disposed on one side surface 10s of each of two or more cells 10 stacked while the spacer 102 disposed between the two or more cells 10, for example, as shown in FIGS. 6 and 7, the positive pole 101p and the negative pole 101n of the two or more cells 10 may be connected to each other via a conductor such as a conductor wire, thereby implementing the series connection.

In general, the stacked cell is classified into a parallel stacked cell 11pL or a series stacked cell 11sL depending on whether the connection between the electrodes of the two or more cells 10 is the parallel connection or the series connection.

### (3-2-2) Parallel Stacked Cell

The parallel stacked cell 11pL includes two or more cells 10 stacked one on top of another such that the major surfaces 10m overlap each other, the two or more cells 10 including: positive poles 101p each of which is disposed on one of the side surfaces 10s of a corresponding one of the two or more cells 10 and which are connected to each other to form the positive pole group 101P; and negative poles 101n each of which is disposed on the other of the side surfaces 10s of the corresponding one of the two or more cells 10 and which are connected to each other to form the negative pole group 101N.

In the parallel stacked cell 11pL of the present embodiment, the positive poles 101p are directly connected to each other, and the negative poles 101n are directly connected to each other.

As described above, the cell group 11 is formed as the stacked cell (the parallel stacked cell 11pL or the series stacked cell 11sL) including the plate-shaped cells 10 stacked one on top of another, thereby implementing a battery pack 1 which includes all-solid-state batteries and which leads to improved reliability and a reduced size.

Moreover, the cell group 11 is configured to be in the aspect of the parallel stacked cell 11pL including plate-shaped cells 10 which are connected in parallel to each other and which are stacked one on top of another, thereby implementing a battery pack 1 which includes all-solid-state batteries and which leads to an increased capacity, improved reliability, and a reduced size.

Further, a plurality of the parallel stacked cells 11pL are coupled to each other in the series connection, thereby implementing a battery pack 1 which includes all-solid-state batteries and which leads to an increased capacity, improved reliability, a reduced size, and an increased voltage.

### (3-2-3) Series Stacked Cell

The series stacked cell 11sL includes two or more cells 10 stacked such that the major surfaces 10m overlap each other while the spacer 102 is disposed between the two or more cells 10, wherein in a set of the positive pole 101p on the side surface 10s of one (hereinafter referred to as a first cell 10) of two adjacent cells 10 of the two or more cells 10 stacked one on top of another and the negative pole 101n on the side surface 10s of the other (hereinafter referred to as a second cell 10) of the two adjacent cells 10, or in a set of the negative pole 101n on the side surface 10s of the first cell 10 and the positive pole 101p on the side surface 10s of the second cell 10, the positive pole 101p and the negative pole 101n are connected to each other via a conductor.

### (3-2-4) Variation of Stacked Cell

Note that the stacked cell (the parallel stacked cell 11pL or the series stacked cell 11sL) may be a combination of the parallel stacked cell 11pL and the series stacked cell 11sL, for example, as shown in FIGS. 6B and 7B.

FIGS. 6B and 7B show the series parallel cell group 11sp as described above, and the series parallel cell group lisp is specifically the "2-series 3-parallel cell group" including three series cell groups 11s which are connected in parallel to each other and each of which includes two cells 10 connected in series to each other.

The "2-series 3-parallel cell group" in FIG. 6B includes six cells 10 (see First Variation of Electrodes) of FIG. 6A stacked while the spacers 102 are each disposed between adjacent two of the six cells 10, and the electrodes are connected to each other as follows. That is, between two cells, namely, first and second cells 10 from the top (hereinafter referred to as a "first cell" and a "second cell"), the negative pole 101n of the first cell is connected to the positive pole 101p of the second cell, the positive pole 101p of the first cell is connected to the positive terminal 13p, and the negative pole 101n of the second cell is connected to the negative terminal 13n.

Further, between two cells, namely, third and fourth cells 10 from the top (hereinafter referred to as a "third cell" and a "fourth cell"), the negative pole 101n of the third cell is connected to the positive pole 101p of the fourth cell, the positive pole 101p of the third cell is connected to the positive terminal 13p, and the negative pole 101n of the fourth cell is connected to the negative terminal 13n.

Furthermore, between two cells, namely, fifth and sixth cells 10 from the top (hereinafter referred to as a "fifth cell" and a "sixth cell"), the negative pole 101n of the fifth cell is connected to the positive pole 101p of the sixth cell, the positive pole 101p of the fifth cell is connected to the positive terminal 13p, and the negative pole 101n of the sixth cell is connected to the negative terminal 13n.

The "2-series 3-parallel cell group" in FIG. 7B includes six cells 10 (see Second Variation of Electrodes) of FIG. 7A stacked while spacers 102 are each disposed between adjacent two of the six cells 10, wherein the electrodes are connected to each other as described below. That is, the positional relationship between the positive pole 101p and the negative pole 101n of first, fourth, and fifth cells 10 from the top (hereinafter referred to as a "first cell", a "fourth cell", and a "fifth cell") is the same as that in FIG. 7A, whereas the positional relationship between the positive pole 101p and the negative pole 101n of second, third, and sixth cells 10 from the top (hereinafter referred to as a "second cell", a "third cell", and a "sixth cell") is opposite (reverse) to that shown in FIG. 7A.

Here, while a distance corresponding to the thickness of the spacer 102 is provided between the first cell and the second cell, the positive pole 101p of the first cell and the negative pole 101n of the second cell in a set face each other, the negative pole 101n of the first cell and the positive pole 101p of the second cell in a set face each other, and the negative pole 101n and the positive pole 101p in the latter set of the two sets are connected to each other via a conductor.

Moreover, while the distance corresponding to the thickness of the spacer 102 is provided between the second cell and the third cell, the negative pole 101n of the second cell and the negative pole 101n of the third cell in a set face each other, the positive pole 101p of the second cell and the positive pole 101p of the third cell in a set face each other, and the negative pole 101n and the negative pole 101n in the former set are connected to each other via a conductor.

Further, while the distance corresponding to the spacer 102 provided between the third cell and the fourth cell, the negative pole 101n of the third cell and the positive pole 101p of the fourth cell in a set face each other, the positive pole 101p of the third cell and the negative pole 101n of the fourth cell in a set face each other, and the positive pole 101p and the negative pole 101n in the latter set are connected to each other via a conductor.

Furthermore, while the distance corresponding to the spacer 102 is provided between the fourth cell and the fifth cell, the positive pole 101p of the fourth cell and the positive pole 101p of the fifth cell in a set face each other, the negative pole 101n of the fourth cell and the negative pole 101n of the fifth cell in a set face each other, and the positive pole 101p and the positive pole 101p in the former set are connected to each other via a conductor.

Moreover, while the distance corresponding to the spacer 102 is provided between the fifth cell and the sixth cell, the positive pole 101p of the fifth cell and the negative pole 101n of the sixth cell in a set face each other, the negative pole 101n of the fifth cell and the positive pole 101p of the sixth cell in a set face each other, and the negative pole 101n and the positive pole 101p in the latter set of the two sets are connected to each other via a conductor.

### (3-3) Coupled Cell

The parallel series cell group 11ps of the present embodiment is, for example, a coupled cell 11pLC. The coupled cell 11pLC includes two or more parallel stacked cells 11pL as described above, the two or more parallel stacked cells 11pL being coupled such that the positive pole group 101P and the negative pole group 101N are connected to each other (i.e., in series connection).

### (3-3-1) First Coupled Cell

The coupled cell 11pLC of the present embodiment is a first coupled cell 11pLCa as shown in, for example, FIG. 2. The first coupled cell 11pLCa includes two or more parallel stacked cells 11pL coupled to each other in a direction parallel to the major surfaces 10m.

In the first coupled cell 11pLCa, the positive pole group 101P of one parallel stacked cell 11pL and the negative pole group 101N of the other parallel stacked cell 11pL of the parallel stacked cells 11pL adjacent to each other are aligned in a direction (X-axis direction) from one side surface 10s to the other side surface 10s of each of the cells 10. This leads to downsizing in a direction perpendicular to the major surfaces 10m (e.g., thinning).

In the first coupled cell 11pLCa of the present embodiment, the positive pole group 101P and the negative pole group 101N are directly connected to each other as shown in, for example, FIG. 2A.

Note that in the first coupled cell 11pLCa, the positive pole group 101P and the negative pole group 101N may be connected to each other via a conductor 105 as shown in FIG. 2B. The conductor 105 thus provided can improve the electrical conductivity between the positive pole group 101P and the negative pole group 101N.

The coupled cell 11pLC including the parallel stacked cells 11pL coupled to each other in the series connection implements the battery pack 1 which includes all-solid-state batteries and which leads to an increased capacity, improved reliability, a reduced size, and an increased voltage.

### (3-3-2) Second Coupled Cell

Note that the coupled cell 11pLC may be a second coupled cell 11pLCb as shown in FIG. 3. The second coupled cell 11pLCb includes two or more parallel stacked cells 11pL coupled to each other in a direction perpendicular to the major surfaces 10m via the insulator 103.

In the second coupled cell 11pLCb, the positive pole group 101P of one parallel stacked cell 11pL of two adjacent parallel stacked cells 11pL and the negative pole group 101N of the other parallel stacked cell 11pL of the two adjacent parallel stacked cells 11pL in a set are aligned with each other in a direction perpendicular to the major surfaces 10m (in the Z-axis direction), and the negative pole group 101N of the one parallel stacked cell 11pL and the positive pole group 101P of the other parallel stacked cell 11pL in a set are aligned with each other in the direction perpendicular to the major surfaces 10m .

The insulator 103 is disposed at a portion between the parallel stacked cells 11pL adjacent to each other except for a portion between the positive pole group 101P and the negative pole group 101N in one of the two sets. The positive pole group 101P and the negative pole group 101N in the one of the two sets are connected to each other via the conductor 105.

This leads to downsizing in a direction parallel to the major surfaces 10m (e.g., slenderizing).

Note that the conductor 105 in the present embodiment is a plate-like conductor extending in a direction perpendicular to the major surfaces 10m as shown in, for example, FIG. 3. The conductor 105 is connected to substantially the entirety of each of the positive pole group 101P and the negative pole group 101N included in the one of the two sets. This leads to improved electrical conductivity and improved strength between the positive pole group 101P and the negative pole group 101N.

Note that the conductor 105 may have the same thickness (size in the Z direction) as the insulator 103 and may be disposed between the positive pole group 101P and the negative pole group 101N included in the one of the two sets. This leads to further downsizing in the direction parallel to the major surfaces 10m.

### (4) Summary

A battery pack (1) of a first aspect includes a cell group (11) including a plurality of cells (10) which are all-solid-state batteries and which are electrically connected to each other. The cell group (11) is a parallel series cell group (11ps) or a series parallel cell group (11sp). The parallel series cell group (11ps) includes two or more parallel cell groups (11p) connected in series to each other. Each of the two or more parallel cell groups (11p) includes, as the plurality of cells (10), three or more cells (10) connected in parallel to each other. The series parallel cell group (11sp) includes three or more series cell groups (11s) connected in parallel to each other. Each of the three or more series cell groups (11s) includes, as the plurality of cells (10), two or more cells (10) connected in series to each other. In the cell group (11), a parallel number (i: i is an integer greater than or equal to 3) is greater than a series number(j: j is an integer greater than or equal to 3) (parallel number i > series number j). The parallel number (i) is a number of the plurality of cells (10) included in each of the two or more parallel cell groups (11p) or a number of the three or more series cell groups (11s) included in the series parallel cell group (11sp). The series number (j) is a number of the plurality of cells (10) included in each of the three or more series cell groups (11s) or a number of the two or more parallel cell groups (11p) included in the parallel series cell group (11ps).

With this aspect, the series number(j) is set to be greater than the parallel number (i), thereby implementing the battery pack (1) including the all-solid-state batteries and leading to improved reliability.

In a battery pack (1) of a second aspect referring to the first aspect, each of the plurality of cells (10) has a plate shape and has side surfaces (10s) provided with electrodes (101p, 101n). The cell group (11) is a stacked cell (11pL, 11sL). The stacked cell (11pL, 11sL) includes, as the plurality of cells (10), two or more cells (10) stacked one on top of another such that major surfaces (10m) of the two or more cells (10) overlap each other, the electrodes (101p, 101n) on the side surfaces (10s) of the two or more cells (10) being connected to each other.

With this aspect, the stacked cell (11pL, 11sL) including the cells (10) each of which is plate-shaped and which are stacked one on top of another implements the battery pack (1) including the all-solid-state batteries and leading to improved reliability and a reduced size.

In a battery pack (1) of a third aspect referring to the second aspect, the side surfaces (10s) include two side surfaces (10s) opposite each other. The two side surfaces (10s) include one side surface (10s) on which a positive pole (101p) is disposed and the other side surface (10s) on which a negative pole (101n) is disposed. The positive pole (101p) is a positive electrode, and the negative pole (101n) is a negative electrode. The cell group (11) is the parallel series cell group (11ps). The two or more parallel cell groups (11p) included in the parallel series cell group (11ps) are two or more parallel stacked cells (11pL). Each of the parallel stacked cells (11pL) includes, as the plurality of cells (10), two or more cells (10) stacked one on top of another such that the major surfaces (10m) of the two or more cells (10) overlap each other. The two or more cells (10) include: the positive pole (101p) such that the two or more cells (10) include positive poles (101p) each of which is disposed on the one side surface and which are connected to each other to form the positive pole group (101P); and the negative pole (101n) such that the two or more cells (10) include negative poles (101n) each of which is disposed on the other side surface and which are connected to each other to from the negative pole group (101N).

With this aspect, the parallel stacked cell (11pL) including the plurality of cells (10) each of which is plate-shaped and which are connected in parallel to each other and are stacked on one another implements the battery pack (1) including the all-solid-state batteries and leading to an increased capacity, improved reliability, and a reduced size.

In a battery pack (1) of a fourth aspect referring to the third aspect, the parallel series cell group (11ps) is a coupled cell (11pLC). The coupled cell (11pLC) includes the two or more parallel stacked cells (11pL), the two or more parallel stacked cells (11pL) being coupled to each other such that at least one of the positive pole group (101P) or the negative pole group (101N) of one of two adjacent parallel stacked cells (11pL) of the two or more parallel stacked cells (11pL) is respectively connected to the negative pole group (101N) or the positive pole group (101P) of the other of the two adjacent parallel stacked cells (11pL).

With this aspect, coupling the parallel stacked cells (11pL) in the series connection implements the battery pack (1) including all-solid-state batteries and leading to an increased capacity, improved reliability, a reduced size, and an increased voltage.

In a battery pack (1) of a fifth aspect referring to the fourth aspect, the coupled cell (11pLC) is a first coupled cell (11pLCa). The first coupled cell (11pLCa) includes the two or more parallel stacked cells (11pL), the two or more parallel stacked cells (11pL) being coupled to each other in a direction parallel to the major surfaces (10m). The positive pole group (101P) or the negative pole group (101N) of one parallel stacked cell (11pL) of two adjacent parallel stacked cells (11pL) of the two or more parallel stacked cells (11pL) included in the first coupled cell (11pLCa) is respectively connected to the negative pole group (101N) or the positive pole group (101P) of the other parallel stacked cell (11pL) of the two adjacent parallel stacked cells (11pL) directly or via a conductor (105).

With this aspect, coupling the parallel stacked cells (11pL) in a direction parallel to the major surfaces (10m) leads to downsizing in a direction perpendicular to the major surfaces (10m) (e.g., thinning).

In a battery pack (1) of a sixth aspect referring to the fourth aspect, the coupled cell (11pLC) is a second coupled cell (11pLCb). The second coupled cell (11pLCb) includes the two or more parallel stacked cells (11pL). The two or more parallel stacked cells (11pL) are coupled to each other in a direction perpendicular to the major surfaces (10m) via an insulator (103). The positive pole group (101P) of one parallel stacked cell (11pL) of two adjacent parallel stacked cells (11pL) of the two or more parallel stacked cells (11pL) included in the second coupled cell (11pLCb) and the negative pole group (101N) of the other parallel stacked cell (11pL) of the two adjacent parallel stacked cells (11pL) in a set are aligned with each other in the direction perpendicular to the major surfaces (10m). The negative pole group (101N) of the one parallel stacked cell (11pL) and the positive pole group (101P) of the other parallel stacked cell (11pL) in a set are aligned with each other in the direction perpendicular to the major surfaces (10m). The insulator (103) is disposed at a portion between the two adjacent parallel stacked cells (11pL) except for a portion between the positive pole group (101P) and the negative pole group (101N) in one of the sets. The positive pole group (101P) and the negative pole group (101N) in the one of the sets are connected to each other via a conductor (105).

With this aspect, coupling the parallel stacked cells (11pL) in the direction perpendicular to the major surfaces (10m) via the insulator leads to downsizing in a direction parallel to the major surfaces (10m) (e.g., slenderizing).

An electric tool (100) of a seventh aspect includes: the battery pack (1) of any one of the first to sixth aspects; and an electric tool body (2) configured to be operated by electric power from the battery pack (1).

With this aspect, the series number(j) is set to be greater than the parallel number (i), thereby implementing the electric tool (100) which includes the battery pack (1) including all-solid-state batteries and which leads to improved reliability.

### Reference Signs List

- 100: Electric Tool
- 1: Battery Pack
- 10: Cell
- 10m: Major surface
- 10s: Side Surface (One Side Surface, The Other Side Surface)
- 101p: Positive Pole
- 101P: Positive Pole Group
- 101n: Negative Pole
- 101N: Negative Pole Group
- 11: Cell Group
- 11p: Parallel Cell Group
- lips: Parallel series Cell Group
- 11s: Series Cell Group
- lisp: Series parallel Cell Group
- 11pL: Parallel Stacked Cell
- 11pLC: Coupled Cell
- 11pLCa: First Coupled Cell
- 11pLCb: Second Coupled Cell
- 11sL: Series Stacked Cell
- 12: Housing
- 13: Terminal
- 13p: Positive Terminal
- 13n: Negative Terminal
- 2: Electric Tool Body
- 21: Attachment
- 22: Driver
- 23: Transmitter
- 3: Tip Tool

## Claims

1. A battery pack comprising a cell group including a plurality of cells which are all-solid-state batteries and which are electrically connected to each other,
the cell group being
a parallel series cell group including two or more parallel cell groups which are connected in series to each other and each of which includes, as the plurality of cells, three or more cells connected in parallel to each other or
a series parallel cell group including three or more series cell groups which are connected in parallel to each other and each of which includes, as the plurality of cells, two or more cells connected in series to each other,
in the cell group, a parallel number which is a number of the plurality of cells included in each of the two or more parallel cell groups or a number of the three or more series cell groups included in the series parallel cell group being greater than a series number which is a number of the plurality of cells included in each of the three or more series cell group or a number of the two or more parallel cell groups included in the parallel series cell group.

2. The battery pack of claim 1, wherein
each of the plurality of cells has a plate shape and has side surfaces provided with electrodes, and
the cell group is a stacked cell including, as the plurality of cells, two or more cells stacked one on top of another such that major surfaces of the two or more cells overlap each other, the electrodes on the side surfaces of the two or more cells being connected to each other.

3. The battery pack of claim 2, wherein
the side surfaces include two side surfaces opposite each other,
the two side surfaces include
one side surface on which a positive pole which is a positive electrode is disposed and
the other side surface on which a negative pole which is a negative electrode is disposed,
the cell group is the parallel series cell group, and
the two or more parallel cell groups included in the parallel series cell group are two or more parallel stacked cells, each of the two or more parallel stacked cells including, as the plurality of cells, two or more cells, stacked one on top of another such that the major surfaces of the two or more cells overlap each other, the two or more cells including the positive pole such that the two or more cells include positive poles each of which is disposed on the one side surface and which are connected to each other to form the positive pole group and the negative pole such that the two or more cells include negative poles each of which is disposed on the other side surface and which are connected to each other to from the negative pole group.

4. The battery pack of claim 3, wherein
the parallel series cell group is a coupled cell including the two or more parallel stacked cells, the two or more parallel stacked cells being coupled to each other such that at least one of the positive pole group or the negative pole group of one of two adjacent parallel stacked cells of the two or more parallel stacked cells is respectively connected to the negative pole group or the positive pole group of the other of the two adjacent parallel stacked cells.

5. The battery pack of claim 4, wherein
the coupled cell is a first coupled cell including the two or more parallel stacked cells, the two or more parallel stacked cells being coupled to each other in a direction parallel to the major surfaces, and
the positive pole group or the negative pole group of one of two adjacent parallel stacked cells of the two or more parallel stacked cells included in the first coupled cell are respectively connected to the negative pole group or the positive pole group of the other of the two adjacent parallel stacked cells directly or via a conductor.

6. The battery pack of claim 4, wherein
the coupled cell is a second coupled cell including the two or more parallel stacked cells, the two or more parallel stacked cells being coupled to each other in a direction perpendicular to the major surfaces via an insulator,
the positive pole group of one parallel stacked cell of two adjacent parallel stacked cells of the two or more parallel stacked cells included in the second coupled cell and the negative pole group of the other parallel stacked cell of the two adjacent parallel stacked cells in a set are aligned with each other in the direction perpendicular to the major surfaces,
the negative pole group of the one parallel stacked cell and the positive pole group of the other parallel stacked cell in a set are aligned with each other in the direction perpendicular to the major surfaces,
the insulator is disposed at a portion between the two adjacent parallel stacked cells except for a portion between the positive pole group and the negative pole group in one of the sets, and
the positive pole group and the negative pole group in the one of the sets are connected to each other via a conductor.

7. An electric tool comprising:
the battery pack of any one of claims 1 to 6; and
an electric tool body configured to be operated by electric power from the battery pack.
